# EUROPEAN PATENT APPLICATION

(11) **EP 4 734 060 A1**
(43) Date of publication of application: **29.04.2026**
(21) Application number: 25210451.8
(22) Date of filing: 22.10.2025
(51) Int. Cl.: G06T 7/73

(54) **IMAGE CAPTURE MEANS POSITIONING APPARATUS AND METHOD OF USE THEREOF**

(30) Priority: 23.10.2024 GB 202415593
(71) Applicant: Ensiovision Limited, Mexborough Yorkshire S64 8AA (GB)
(72) Inventor: Mason, Tim, Mexborough, S64 8AA (GB); Mason, Aidan, Mexborough, S64 8AA (GB); Stacey, Mark, Mexborough, S64 8AA (GB); Facwett, Roger, Mexborough, S64 8AA (GB); Fawcett, Oliver, Mexborough, S64 8AA (GB); Bolton, Rowan, Mexborough, S64 8AA (GB); McGowan, Jon, Mexborough, S64 8AA (GB)
(74) Representative: Tomkinson, Alexandra

(57) **Abstract**

Image capture means positioning apparatus is provided including image capture means capable of capturing one or more images in use; visual identification means arranged so as to be capable of being captured in the one or more images taken by the image capture means in use; and micro-processing means. The micro-processing means are arranged to undertake the following:
a) process the one or more images captured by the image capture means and identify a current image position of the visual identification means in said images;
b) compare the current image position of the visual identification means in the images to a previously known image position of the visual identification means;
c) determine if there is a difference between the current image position of the visual identification means and the previously known image position of the visual identification means and, if a difference is detected, initiate a pre-determined action or actions in respect of the same.

## Description

The present invention relates to image capture means positioning apparatus and/or to a method of using image camera means positioning apparatus.

Although the following description refers almost exclusively to image capture means positioning apparatus for use on a fork lift truck, it will be appreciated by persons skilled in the art that the apparatus of the present invention could be used on any vehicle, movable vehicle or material handling apparatus that requires alignment or repositioning of image capture means or apparatus in use.

In the logistics market, it is known to provide warehouse tracking systems which automatically scan, track, weight and/or record dimensions of one or more items that are being stored and/or moved within a warehouse or storage facility in use. The one or more items are typically moved about or within the warehouse or storage facility using fork lift trucks, although cranes, conveyor belts, autonomous vehicles and/or the like can also be used. It is known to use image capture apparatus in the form of cameras on fork lift trucks to capture images of the items being transported in use and for these images to be analysed to allow dimension measurements, item quality checks and/or the like to be carried out using the same. For example, captured dimension measurements can be used in a number of different downstream processes, such as optimisation of item and pallet packing and for customer invoicing and billing purposes. Many of the known dimension measuring methods rely on having a known pre-determined orientation of the cameras that capture the images to ensure correct dimension measurements are taken.

However, problems associated with current warehouse tracking systems and dimension measurement apparatus is that due to the high speeds at which the fork lift trucks travel around the warehouse or storage facility in use and the crowded environment of the warehouse or storage facility, there is a tendency for the cameras to get accidentally knocked in use, such as for example, if the camera is accidentally knocked by a wall or shelving as it travels around the warehouse. This results in the image capture area of the cameras being inadvertently adjusted, thereby resulting in inaccuracies in the data being recorded using the captured images from the cameras.

It is therefore an aim of the present invention to provide image capture means positioning apparatus that overcomes the abovementioned problems.

It is a further aim of the present invention to provide a method of using image camera means positioning apparatus.

It is a yet further aim of the present invention to provide a fork lift truck or material handling apparatus that includes image capture means positioning apparatus.

It is a yet further aim of the present invention to provide a method of using a fork lift truck or material handling apparatus with image capture means positioning apparatus.

According to a first aspect of the present invention there is provided image capture means positioning apparatus; said apparatus including image capture means capable of capturing one or more images in use; visual identification means arranged so as to be capable of being captured in the one or more images taken by the image capture means in use; and micro-processing means; and wherein said micro-processing means are arranged to undertake the following:
a) process the one or more captured images from the image capture means and identify a current image position of the visual identification means in said images;
b) compare the current image position of the visual identification means in the images to a previously known image position of the visual identification means;
c) determine if there is a difference between the current image position of the visual identification means and the previously known image position of the visual identification means and, if a difference is detected, initiate a pre- determined action or actions in respect of the same.

Thus, the apparatus of the present invention allows for the detection of accidental camera knock or camera re-positioning and to automatically undertake a pre-determined action or actions to remedy or help to remedy the situation. This ensures that the cameras are positioned to capture the correct image or location view for the images and that any measurements and/or processes subsequently being undertaken using the images captured by the cameras remain accurate and correct. For example, the one or more images can be used to capture and/or calculate data relating to one or more items in use. For example, one or more dimensions, length, width, depth, height, volume, number of items, quality, condition, one or more parameters, characteristics and/or the like of the items can be calculated from the captured images. The captured and/or calculated data can be used for one or more downstream processes relating to the apparatus, such as for example, optimization of item packing, customer billing and invoicing purposes and/or the like.

Preferably a difference between the current image position of the visual identification means and a previously known image position of the visual identification means provides an indication that the orientation and/or position of the image capture means has changed; the orientation and/or position of the visual identification means has changed; and/or the relative position and/or orientation between the visual identification means and the image capture means has changed.

Preferably the visual identification means is provided in a pre-determined and known fixed and/or stationary position in use, such as for example in a fixed position on a surface, a vehicle, material handling apparatus and/or a forklift truck in use. Therefore, the position and/or orientation of the visual identification means should not change in use unless the image capture means have changed position. Further preferably the visual identification means is provided in a fixed position on a surface, a vehicle, material handling apparatus or forklift truck that is unlikely to be knocked or changed in use. As such, it can largely be assumed that any difference between the current image position and the previously known image position of the visual identification means is due, or solely due, to knock or re-positioning of the image capture means.

Preferably with the visual identification means in a pre-determined and known position, the corresponding position of the image capture means that captures the visual identification means in this pre-determined and known position provides the previously known or original position for the image capture means (i.e. it provides a known base line position for the visual identification means).

Preferably the image capture means are provided in a pre-determined and known fixed and/or stationary position in use. However, due to the position the image capture means are typically located to allow images of one or more items to be captured in use, the image capture means are susceptible or vulnerable to accidental knock, re-positioning or inadvertent re-positioning in use. Therefore, it can largely be assumed that any difference between the current image position and a previously known image position of the visual identification means is due to knock or re-positioning of the image capture means.

In one embodiment the pre-determined action or actions initiated as a result of detection of a difference in position of the visual identification means in the images can be any or any combination of the following: issuance of a message or warning to a user of the apparatus; activation of movement means to move or automatically move the image capture means; re-calibration or automatic re-calibration of one or more measurements calculated using the images captured by the image capture means.

In one embodiment the message or warning issued can be a visual, audio and/or kinaesthetic message or warning. For example, a text message, a warning indication, an alarm, an audio message, one or more lights, one or more vibration(s) and/or the like can be issued to inform a user that the image capture means has been knocked or re-positioned and/or that the user has to take action to correct the position and/or orientation of the image capture means.

In one embodiment the message or warning issued can be displayed, felt and/or sounded to a user or operator of the forklift truck or material handling apparatus, to a third party and/or to a remote user as required.

In one embodiment moving or re-positioning of the image capture means once a change in position has been detected can be undertaken manually. In an alternative embodiment moving or re-positioning of the image capture means once a change in position has been detected can take place automatically.

Preferably the movement means are provided on and/or associated with the image capture means to allow movement of the image capture means automatically and/or manually in use. For example, if knock or re-positioning of the image capture means is detected in use by the apparatus, the movement means can automatically move and/or adjust the image capture means to correct the position of the image capture means.

Preferably the image capture means is moved or repositioned back to an original pre-determined position or a previously known position on manual or automatic re-positioning or movement.

Preferably the original pre-determined position or previously known position of the image capture means corresponds to an original pre-determined image position or previously known image position of the visual identification means.

Preferably the apparatus is arranged such that success of the movement or re-positioning is determined based on the image capture means capturing an image with the visual identification means in the original pre-determined image position or previously known image position once the movement or re-positioning has taken place.

Preferably the original pre-determined position or previously known position of the image capture means are stored, captured or recorded in memory or digital storage means associated with the micro-processing means and/or apparatus.

Preferably the memory or digital storage means includes any or any combination of a digital data storage device, solid state drive, hard disk drive, flash drive, optical drive, cloud storage and/or the like.

In one example the movement means includes any device or mechanism that allows movement of the image capture means; any device or mechanism that allows movement of the image capture means that allows repositioning of the image capture means; pan, yaw and/or tilt movement means; rotational movement means; sliding movement means; pivoting movement means; and/or the like.

Preferably the movement means is arranged to allow up to 6 degrees of freedom of movement of the image capture means in use.

Preferably the movement means is arranged to allow 2 degrees of freedom of movement of the image capture means in use. For example, these 2 degrees of freedom can be pitch and yaw.

In one embodiment the image capture means is a 2D camera and is able to detect two degrees of movement in the visual identification means, such as for example, in the X, Y axis. This can be used to calculate and correct changes in the pitch and yaw of the image capture means in one example.

In one embodiment control means are provided for controlling, moving and/or monitoring the image capture means, the movement means, the visual identification means and/or the like in use.

Preferably the control means can be operated by one or more users; an operator of the vehicle, forklift truck or material handling apparatus on which the image capture means positioning apparatus is provided; one or more third parties and/or the like.

Preferably the third parties can control the image capture means remotely and/or at the location of the vehicle, forklift truck or material handling apparatus.

Preferably the control means is any device or mechanism that allows control of movement of the image capture means in use.

Preferably the micro-processing means are provided in and/or associated with the control means.

In one embodiment the micro-processing means is arranged to use the detected difference in position and/or orientation of the visual identification means in the captured images as a re-calibration value or for recalibration purposes for use in a measurement and/or calculation subsequently undertaken using the captured one or more images.

In one example, the micro-processing means is arranged to use the detected difference in position and/or orientation of the visual identification means in the captured images to calculate a correction value to be used for subsequent measurements and/or calculations subsequently undertaken using the captured one or more images. For example, this may particularly be the case (although not necessarily exclusively the case) if the detected difference is relatively small.

In one embodiment the image capture means could include any means or device for capturing image data, one or more images and/or digital image data. For example, the image capture means could include any or any combination of one or more cameras, video cameras, 2D cameras, 3D cameras, video live streaming means, image recorder and/or the like.

Preferably the image capture means is used to capture image data, video data, at least one "snapshot", provide an image data file and/or the like.

In one embodiment the visual identification means is any visual device that can provide an identification location to which a position of an image capture means can be calibrated to or that can act as a reference point; includes any or any combination of a visual marker, a code, an image, a Quick Response (QR) code, a bar code, a Virtual Reality (VR) code, one or more numbers, letters, symbols, images, data matrix code, RFID tags and/or the like.

Preferably the previously known image position of the visual identification means is stored in data storage means provided in or associated with the micro-processing means and/or apparatus.

Preferably the previously known image position or originally known image position of the visual identification means includes or is identified by one or more cartesian coordinates, an X-axis position, a Y-axis position, a Z-axis position and/or the like.

In one embodiment the previously known image position or original known image position of the visual identification means includes or consists of an X-axis position and a Y-axis position.

Preferably the current position of the visual identification means includes one or more cartesian coordinates, an X-axis position, a Y-axis position, a Z-axis position and/or the like.

In one embodiment the current position of the visual identification means includes or consists of an X-axis position and a Y-axis position.

Preferably the previously known image position and/or current image position of the visual identification means is detected and/or calculated using an algorithm, computer vision algorithm and/or the like.

In one embodiment the image capture means is capturing one or more images continuously; substantially continuously; live; at one or more pre-determined times or time periods; at one or more arbitrary times or time periods; when a vehicle, forklift truck or material handling apparatus with which the position apparatus is provided on or associated with is operational and/or moving; at one or more pre-determined positions or locations; following a gear change of the vehicle, forklift truck or material handling apparatus and/or the like.

In one embodiment the current image position of the visual identification means is captured continuously; substantially continuously; live; at one or more pre-determined times or time periods; at one or more arbitrary times or time periods; when a vehicle, forklift truck or material handling apparatus with which the position apparatus is provided on or associated with is operational and/or moving; at one or more pre-determined positions or locations; following a gear change of the vehicle, forklift truck or material handling apparatus and/or the like.

In one embodiment the apparatus includes data storage means for storing image data, visual identification position data and/or the like.

Preferably the image capture means are being used to capture images of or relating to one or more items being carried and/or transported by a fork lift truck and/or material handling apparatus in use.

In one embodiment the one or more images can also be used to for the detection of damage, the condition and/or the quality relating to one or more items being captured by the image capture means in use, the dimensions and/or quantity of the one or more items being captured by the image capture means in use.

In one embodiment the image capture means positioning apparatus is an automated system in that automatically detects and corrects for changes in positioning of image capture means in use.

Preferably the micro-processing means includes one or more micro-processors, computers, servers and/or the like.

In one embodiment the apparatus and/or micro-processing means could include software, algorithms, computer vision, artificial intelligence (AI), an autonomous neural network (ANN), one or more computer programs, hardware and/or the like.

In one embodiment the apparatus includes communication means for allowing data to be communication to and/or from the same in use.

Preferably the communication means includes one or more transmitters, receivers, transceivers, wired means, wireless means and/or the like.

In one embodiment a single image capture means or device is provided or a plurality of image capture means or devices can be provided in use.

In one embodiment two or more image capture means or devices are provided and are located a spaced distance apart from each other in use.

In one embodiment a single visual identification means or a plurality of visual identification means can be provided for capture by one or a plurality of image capture means in use.

In one embodiment the image capture means positioning apparatus can be provided on any vehicle or material handling apparatus that is involved in the movement and/or lifting of goods ot items in a locality in use. The vehicle or material handling apparatus can be fixed or movable across a surface in use. The vehicle or material handling apparatus can be manually operated or autonomous in form. For example, the vehicle or material handling apparatus could be in the form of or include a crane, goods lifting apparatus, fixed crane, stationary crane or mobile crane, forklift truck, boom truck, a powered vehicle, a powered material handling apparatus, a manually powered vehicle, material handling apparatus or lifting equipment, goods container lifting apparatus, conveyor apparatus, pallet moving apparatus and/or the like.

In one embodiment the image capture means positioning apparatus is retrofitted to an existing vehicle or material handling apparatus.

In one embodiment the apparatus includes power means for powering one or more components of the apparatus in use, such as for example, the movement means, the image capture means and/or the like.

Preferably the power means can include any or any combination of a vehicle's own power source, a motor, an engine, electrical power source, battery, generator, rechargeable battery, solar power means, wind turbine generating means and/or the like.

In one embodiment the image capture means and/or the visual identification means includes attachment means for attaching the same to a surface, at least part of a vehicle, forklift truck or material handling apparatus in use. For example, the attachment means could include adhesive, welding, one or more brackets, screws, nuts and bolts, VELCRO (hook and loop fastenings), ties, clips, inter-engaging members and/or the like.

In one embodiment the current image position is a real time image position or the last known image position of the visual identification means in said one or more images.

In one example, the image capture means positioning apparatus is camera positioning apparatus. The apparatus is typically used for positioning a camera used to capture one or more images in use, or re-position a camera in use following inadvertent adjustment or movement of the camera position.

According to a second aspect of the present invention there is provided a method of using image capture means positioning apparatus; said method including the steps of:
- capturing one or more images in use;
- providing visual identification means that are captured in the one or more images taken by the image capture means; and wherein micro-processing means undertakes the steps of:
   a) processing the one or more images and identifying a current image position of the visual identification means in said images;
   b) comparing the current image position of the visual identification means in the images to a previously known image position of the visual identification means;
   c) determining if there is a difference between the current image position of the visual identification means and the previously known image position of the visual identification means and, if a difference is detected, initiating a pre-determined action or actions in respect of the same.

According to a third aspect of the present invention there is provided a fork lift truck including image capture means positioning apparatus.

According to a fourth aspect of the present invention there is provided material handling apparatus including image capture means positioning apparatus.

According to a fifth aspect of the present invention there is provided a method of using a fork lift truck including image capture means positioning apparatus.

According to a sixth aspect of the present invention there is provided a method of using material handling apparatus including image capture means positioning apparatus.

An embodiment of the present invention will now be described with reference to the following figures, wherein:

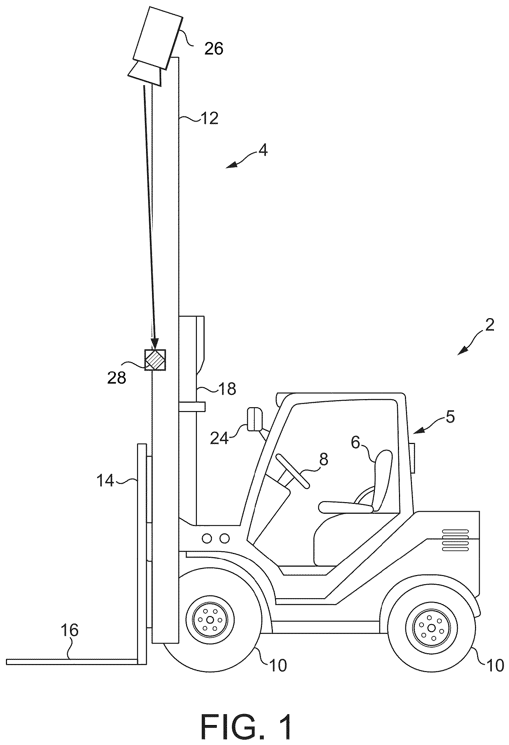

Figure 1 is a simplified view of a fork lift truck including image capture means positioning apparatus according to an embodiment of the present invention;
Figure 2 shows a captured image with previously known position data calculated for a visual identification means according to one embodiment;
Figure 3 is a captured image with previously known position data and real time position data calculated for a visual identification means following a change in position of the image capture means in use;
Figure 4 illustrates examples of movements that can be undertaken to re-position the image capture means in one embodiment following detection of knock of the image capture means.

Referring to the figures, there is illustrated there is illustrated a fork lift truck 2 which image capture means positioning apparatus 4 according to an embodiment of the present invention.

The fork lift truck 2 is a movable powered vehicle that is typically used within a goods storage facility for moving goods or items loaded onto pallets within the facility. The forks of the truck are slidable in and out of apertures provided in the pallet for lifting and transporting purposes.

The fork lift truck 2 typically comprises an operator's cabin 5 containing an operator's seat 6, a steering wheel 8 and associated vehicle controls. The fork lift truck 2 has four wheels 10 to allow the truck to move across a ground surface in use. A stationary mast 12 is provided at the front of the truck 2 on which a carriage 14 is movably mounted. A pair of outwardly protruding and spaced apart forks 16 are mounted on the carriage 14 for location in location holes on a goods pallet in use. A guard 18 is also mounted on carriage 14 to prevent any goods loaded on the forks 16 from moving towards the operator in use. A lifting mechanism (not shown) is provided on the mast 12 for allowing reciprocal linear movement of the carriage 14 along the mast 12 in use between raised and lowered positions. A tilting mechanism can also associated with mast 12 to allow the same to be moved at angles with respect to the vertical in use. Lights 24 are provided on the truck 2 to help an operator of the truck to see in poor light conditions and to allow other people within the vicinity of the truck 2 to see the truck in use.

The movable carriage 14 typically includes two lateral spaced apart arm members or cheek plates with a joining arm member located therebetween. The lateral spaced apart arm members or cheek plates move within the mast structure 12 to allow movement of the movable carriage 14 in use.

Image capture means in the form of 3D cameras 26 are attached to mast 12 by suitable attachment means. The cameras 24 is vulnerable to being knocked or accidentally re-positioned due to the busy storage facility the truck 2 is operating in use. Since images captured by the cameras 24 are typically being used to calculate, monitor and/or detect one or more dimensions of items being carried by the truck, it is important for the cameras 24 to be positioned correctly with respect to the forks 16 of the truck 2.

In accordance with the present invention, the image capture means positioning apparatus 4 is provided to detect knock or accidental re-positioning of the cameras 24. Visual identification means in the form of a physical visual marker 28 is located at a pre-determined fixed position on the stationary mast 12 that is normally visible and detectable by the cameras 24 in use. The pre-determined known position of the visual marker 28 relative to the cameras is stored in data storage means or memory provided as part of the apparatus 4. This pre-determined known position, in one example, is the X, Y coordinate position of the visual marker in an image captured by the cameras when the cameras are in a pre-determined position.

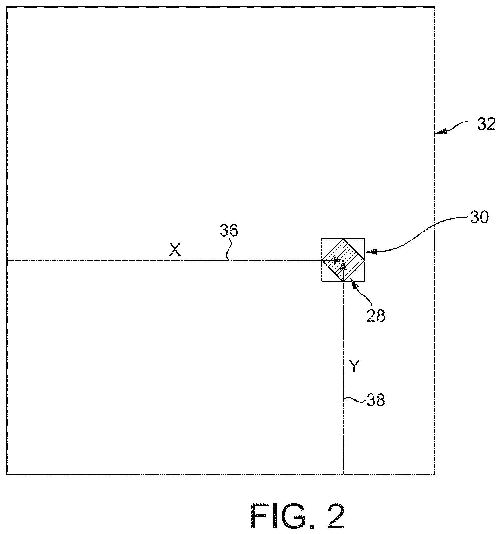

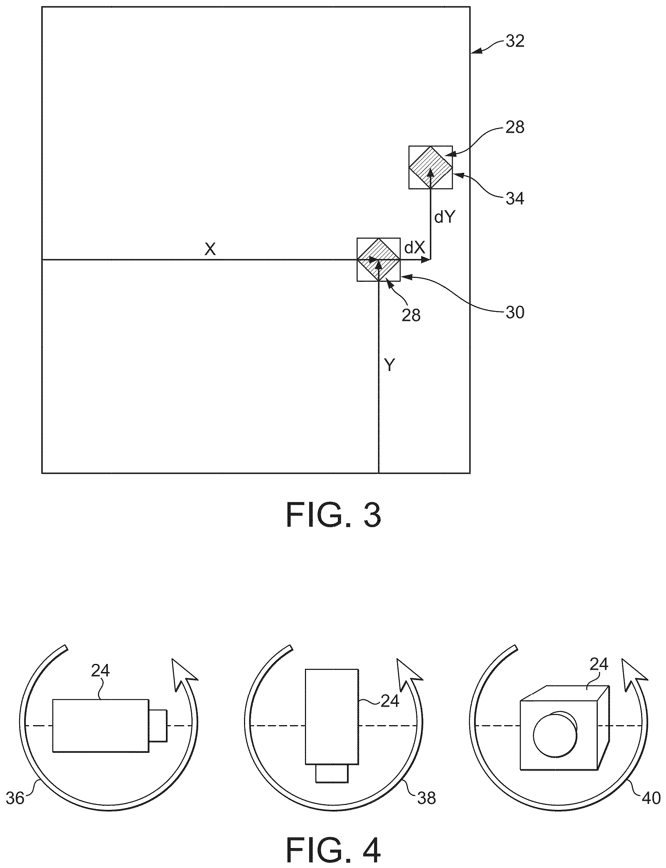

The apparatus 4 further includes micro-processing means, which in one example can be in the form of a computer, that is arranged to monitor the real time position of the visual marker 28 in images captured by the cameras 24. The micro-processing means compares the current image position 34 of the visual marker 28 in the captured images 32 with the previously known image position 30 of the visual marker 28 and determines if there is a difference. For example, the known position 30 of the visual marker 28 can be given an X-axis coordinate 36 and a Y- axis coordinate 38 using computer vision, as shown in figure 2. The real time position 34, as shown in figure 3, shows the position of the visual marker 28 has moved with respect to the known position 30 in captured image 32 by an amount of X distance or 'dX' and an amount of Y distance or 'dY'. This movement of the visual marker 28 corresponds to a comparable movement of the cameras 24 following accidental knock of the cameras 24. On detection of this difference in position of the visual marker 28 in the captured images, the micro-processing means initiates one or more pre-determined actions.

The one or more pre-determined actions can include issuing a message or warning to a user of the apparatus that camera knock has been detected. The user can then decide whether to manually move the cameras back to the original known position. Alternatively, or in addition, a movement mechanism associated with the cameras 24 can be used to automatically move the cameras back to the original known position. Figure 4 illustrates some of the movements that can be undertaken by the movement mechanism to re-position the cameras 24 following detection of camera knock. For example, the movement mechanism could allow pitch movement 36, yaw movement 38 and/or roll movement 40 camera 24 to enable repositioning of the camera 24 in use. Alternatively, since the micro-processing knows how much the cameras 24 have been moved based on the change in position of the visual marker 28 in the images 32, it can apply a recalibration value to any calculation that is subsequently taken using the images. For example, the recalibration value can be applied to a dimension calculation that is taken of an item being carried by the truck 2 in use.

By ensuring the correct positioning of the cameras used in downstream processes and/or calculations in the apparatus, the accuracy of these downstream processes and/or calculations is ensured.

## Claims

1. Image capture means positioning apparatus; said apparatus including image capture means capable of capturing one or more images in use; visual identification means arranged so as to be capable of being captured in the one or more images taken by the image capture means in use; and micro-processing means; and wherein said micro-processing means are arranged to undertake the following:
a) process the one or more captured images from the image capture means and identify a current image position of the visual identification means in said images;
b) compare the current image position of the visual identification means in the images to a previously known image position of the visual identification means;
c) determine if there is a difference between the current image position of the visual identification means and the previously known image position of the visual identification means and, if a difference is detected, initiate a pre-determined action or actions in respect of the same.

2. The image capture means positioning apparatus according to claim 1, wherein a difference between the current image position of the visual identification means and a previously known image position of the visual identification means in the captured images provides an indication that the orientation and/or position of the image capture means has changed; the orientation and/or position of the visual identification means has changed; and/or the relative position and/or orientation between the visual identification means and the image capture means has changed.

3. The image capture means positioning apparatus according to any preceding claim, wherein the visual identification means is provided in a pre-determined and known fixed or stationary position in use.

4. The image capture means positioning apparatus according to any preceding claim, wherein the pre-determined action or actions initiated as a result of detection of a difference in position of the visual identification means in the images can be any or any combination of: issuance of a message or warning to a user of the apparatus; activation of movement means to allow movement of or to automatically move the image capture means; re-calibration or automatic re-calibration of one or more measurements calculated using the images captured by the image capture means.

5. The image capture means positioning apparatus according to claim 4, wherein the movement means are provided on and/or associated with the image capture means to allow movement of the image capture means automatically and/or manually in use.

6. The image capture means positioning apparatus according to any preceding claim, wherein when a difference between the current image position of the visual identification means and a previously known image position of the visual identification means is identified, the image capture means is moved or repositioned back to an original predetermined position or a previously known position.

7. The image capture means positioning apparatus according to any preceding claim, wherein the original pre-determined position or the previously known position of the image capture means are stored in memory or storage means associated with the micro-processing means and/or apparatus.

8. The image capture means positioning apparatus according to any preceding claim, wherein the movement means includes any device or mechanism that allows movements of the image capture means; pan, yaw and/or tilt movement means; rotational movement means; sliding movement means; pivoting movement means and/or the like.

9. The image capture means positioning apparatus according to any preceding claim, wherein the micro-processing means is arranged to use the detected difference in position and/or orientation of the visual identification means in the captured images as a re-calibration value, for calibration purposes, as a correction value and/or for correction purposes for use in a measurement or calculation subsequently undertaken using the captured one or more images in use.

10. The image capture means positioning apparatus according to any preceding claim, wherein the image capture means includes any means or device for capturing image data, one or more cameras, one or more 2D cameras, one or more 3D cameras, one or more video cameras, an image recorder, and/or video live streaming means.

11. The image capture means positioning apparatus according to any preceding claim, wherein the visual identification means includes any or any combination of a visual marker, a code, an image, a QR code, a bar code, a VR code, one or more numbers, letters, symbols, images, data matrix code or an RFID tag.

12. The image capture means positioning apparatus according to any preceding claim, wherein the previously known or originally known image position of the visual identification means includes or is identified by one or more cartesian coordinates, an X- axis position, a Y-axis position, and/or a Z-axis position.

13. The image capture means positioning apparatus according to any preceding claim, wherein the image capture means is capturing one or more images continuously; substantially continuously; live; at one or more predetermined times or time periods; at one or more arbitrary times or time periods; when a vehicle, forklift truck or material handling apparatus with which the positioning apparatus is provided on associated with is operational or moving; at one or more predetermined positions or locations; or following a gear change of the vehicle, forklift truck or material handling apparatus.

14. The image capture means positioned apparatus according to any preceding claim, wherein the image capture means and/or the visual identification means includes attachment means for attaching the same to a surface and/or at least part of a vehicle, forklift truck or material handling apparatus in use.

15. A method of using image capture means positioning apparatus; said method including the steps of:
- capturing one or more images in use;
- providing visual identification means that are captured in the one or more images taken by the image capture means; and wherein micro-processing means undertakes the steps of:
a) processing the one or more images and identifying a current image position of the visual identification means in said images;
b) comparing the current image position of the visual identification means in the images to a previously known image position of the visual identification means;
c) determining if there is a difference between the current image position of the visual identification means and the previously known image position of the visual identification means and, if a difference is detected, initiating a pre-determined action or actions in respect of the same.
